# EUROPÄISCHE PATENTSCHRIFT

(11) **EP 1 425 954 B1**
(45) Veröffentlichungstag und Bekanntmachung des Hinweises auf die Patenterteilung: **31.05.2006**
(21) Anmeldenummer: 03027714.9
(22) Anmeldetag: 02.12.2003
(51) Int. Cl.: A01D 41/12, B65G 45/00, B65G 53/52, B08B 9/04

(54) **Reinigungseinrichtung für ein Entladerohr einer Erntemaschine**
Cleaning device for an unloading tube of a harvester
Dispositif de nettoyage pour un tube de décharge d'une machine de récolte

(30) Priorität: 04.12.2002 US 309978
(43) Veröffentlichungstag der Anmeldung: 09.06.2004
(73) Patentinhaber: DEERE & COMPANY, Moline, Illinois 61265-8098 (US)
(72) Erfinder: Pope, Glenn E., IL 61486 Viola (US)
(74) Vertreter: Holst, Sönke

(56) Entgegenhaltungen:
- WO-A-02/28751
- DE-C- 449 393

## Beschreibung

Die Erfindung betrifft eine Reinigungseinrichtung für ein Entladerohr einer Erntemaschine, insbesondere eines Mähdreschers.

Landwirtschaftlich angebautes Erntegut kann als essbares Erntegut, nichtessbares Erntegut, genetisch modifizierte Organismen (GMO), nichtgenetisch modifizierte Organismen, organisch angebaut, pestizidfrei oder entsprechend anderer Eigenschaften klassifiziert werden. Nichtessbares Erntegut können beispielsweise Fasern liefernde Pflanzen, Baumwolle oder Gummi sein. Genetisch modifiziertes Erntegut kann Gemüse sein, das genetisch manipuliert wurde, um die mögliche Regalstandzeit gegenüber traditionell angebautem Gemüse zu verlängern. Organisch angebautes Erntegut wird von Pflanzen geerntet, die ohne Beaufschlagung mit bestimmten Pestiziden, Herbiziden oder anderen Chemikalien angebaut wurden.

Das Erntegut kann entsprechend spezifischer Eigenschaften oder Spezifikationen angebaut werden. Die Eigenschaften des Ernteguts können auf der genetischen Zusammensetzung des Ernteguts oder den Anbaupraktiken des Ernteguts beruhen, oder auf beiden. Es kann beispielsweise eine bestimmte Art von Mais angebaut werden, der aufgrund genetischer oder umgebungsbedingter Faktoren einen größeren Ölgehalt hat als andere Arten. In ähnlicher Weise kann eine bestimmte Art von Sojabohnen angebaut werden, die einen anderen Proteingehalt oder eine andere wünschenswerte Eigenschaft hat. Ein Verarbeiter, eine pharmazeutische Gesellschaft, ein Hersteller oder ein anderer Betroffener kann den Wunsch haben, landwirtschaftliche Produkte mit spezifischen Eigenschaften von einem Anbauer oder anderen Lieferanten zu erwerben. Der Anbauer oder Lieferant kann sich wünschen, für Erntegut mit spezifischen Eigenschaften einen höheren Preis zu verlangen als für ein handelsübliches Erntegut. Der Erwerber des landwirtschaftlichen Produkts kann eine hinreichende Bestätigung wünschen, dass das gekaufte landwirtschaftliche Produkt tatsächlich die gesuchten Eigenschaften aufweist.

Es besteht somit ein Bedarf daran, Erntegut mit spezifischen Eigenschaften während des Anbaus und der Verteilung und jeglicher daraus abgeleiteter Produkte genau zu identifizieren. Außerdem kann ein Erwerber eines landwirtschaftlichen Produkts oder Ernteguts die Möglichkeit wünschen oder verlangen, die Identität des Ernteguts mit spezifischen Eigenschaften nachzuverfolgen, um das Vorhandensein von Eigenschaften des Ernteguts oder die Abwesenheit unerwünschter Eigenschaften als Bedingung für eine kommerzielle Transaktion zu überprüfen.

Es besteht demnach ein Bedarf, Erntegut während der Ernte zu trennen, damit keine Vermischung von Erntegut oder Erntegutresten mit verschiedenen Eigenschaften stattfindet. Deshalb wird eine Erntemaschine, wie ein Mähdrescher, vorzugsweise gereinigt, bevor sie bei der Ernte eines nachfolgenden Ernteguts mit anderen Eigenschaften verwendet wird.

Die typische Zeit und der zugehörige Aufwand zur vollständigen Entfernung des gesamten Korns und sämtlicher Erntegutreste aus dem Mähdrescher ist sehr lang und die Aufgabe ist schwierig. Eines der schwierigeren Probleme in der Reinigungsprozedur ist die Reinigung des horizontalen Entladerohrs. Es bestehen nur eine begrenzte Zugangsmöglichkeit und kein effektives Verfahren, zwecks einer geeigneten Reinigung Zugang zum Rohr zu bekommen.

Das der Erfindung zu Grunde liegende Problem wird darin gesehen, die genannten Probleme zu überwinden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung stellt ein Düsensystem und einen Düsenentwurf zur Verwendung in zu reinigenden Bereichen von Erntemaschinen bereit. Bei einem Beispiel einer Ausführungsform wird ein strombasierendes Reinigungssystem für ein Entladerohr einer Erntemaschine, wie eines Mähdreschers, bereitgestellt. Das Entladerohr enthält einen Entladeschneckenförderer und eine Vielzahl von Düsen, die in der Regel teilweise innerhalb des Entladerohrs angebracht sind. Die Düsen haben Austrittsöffnungen, die im Wesentlichen in Längsrichtung des Entladerohrs ausgerichtet sind, um das Innere des Entladerohrs mit Strömen hoher Geschwindigkeit auszusetzen und dadurch eine Reinigung des Entladerohrs von Korn und anderen Resten zu bewirken. Die Düsen sind mit Leitungen verbunden, die unter Druck stehendes Medium bereitstellen. Das zur Reinigung des Entladerohrs aus den Düsen strömende Medium kann Luft, ein anderes Gas oder Gasgemisch oder eine Flüssigkeit sein, wie Wasser, Alkohol oder eine Seifenlösung. Die Leitungen können mit geeigneten Ventilen verbunden sein.

Auf diese Weise wird eine Möglichkeit bereitgestellt, zwischen der Ernte von Erntegut mit unterschiedlichen Eigenschaften das Entladerohr eines Mähdreschers schnell, einfach und gründlich von Korn und Verunreinigungen zu befreien.

Die Düsen können Gehäuse oder Körper aufweisen, die eine Wand des Entladerohrs durchdringen. Die Körper haben innerhalb des Entladerohrs ein in Flussrichtung abgeschrägtes Profil, um den Widerstand auf den Kornfluss im Entladerohr während des normalen Entladebetriebs zu minimieren.

Die Düsen sind in Längsrichtung des Entladerohrs voneinander beabstandet angeordnet. Sie befinden sich vorzugsweise 45 Grad oberhalb eines Bodens des Entladerohrs, wobei ihre Austrittsöffnungen vorzugsweise etwa 10 Grad aus der Horizontalen nach unten geneigt sind.

Der Entladeschneckenförderer kann sich drehen, während Luft in das Entladerohr geleitet wird.

Die Düsen können nacheinander und in Gruppen von Düsen betrieben werden, wobei zuerst die Düsen am Einlassende und danach die dem Auslassende des Entladerohrs näheren Düsen betrieben werden.

In den Zeichnungen ist ein nachfolgend näher beschriebenes Ausführungsbeispiel der Erfindung dargestellt. Es zeigt:
- Fig. 1: eine schematische Seitenansicht einer Erntemaschine, in der die vorliegende Erfindung verwirklicht ist,
- Fig. 2: eine schematische Draufsicht auf die Erntemaschine aus Figur 1,
- Fig. 3: ein schematisches Diagramm eines erfindungsgemäßen Reinigungssystems, das mit Druckluft arbeitet,
- Fig. 4: eine perspektivische Ansicht eines Abschnitts des Entladerohrs,
- Fig. 5: eine perspektivische Ansicht einer in Figur 4 gezeigten Luftdüse,
- Fig. 6: eine Schnittansicht, die im Wesentlichen entlang der Linie 6-6 in Figur 5 aufgenommen ist, und
- Fig. 7: eine vergrößerte perspektivische Explosionszeichnung, teilweise im Schnitt gezeichnet, von einer anderen Ausführungsform einer Luftdüse, die am Entladerohr befestigt ist.

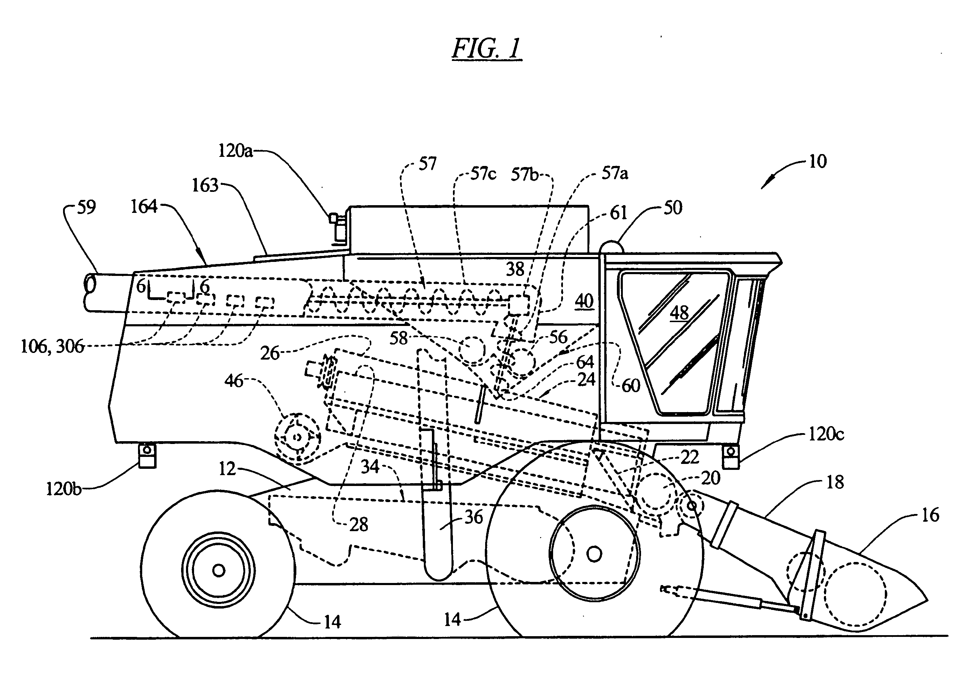

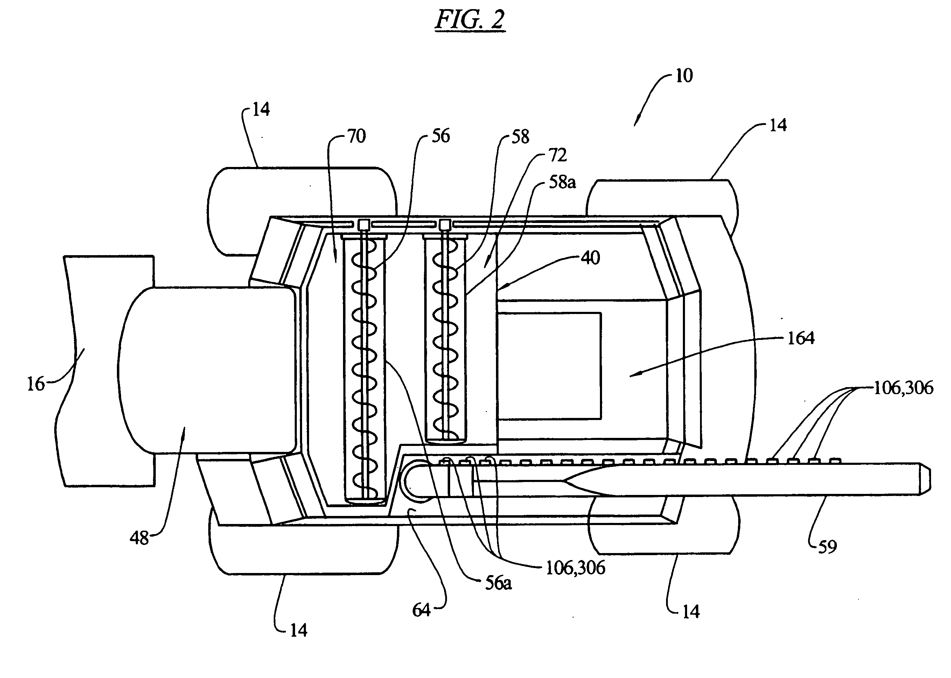

Die Figuren 1 und 2 zeigen einen landwirtschaftlichen Mähdrescher 10, der eine tragende Struktur 12 mit im Eingriff mit dem Erdboden befindlichen Mitteln 14 aufweist, die sich von der tragenden Struktur 12 nach unten erstrecken. Ein derartiger Mähdrescher ist in der US 6 285 198 detailliert beschrieben. Anstelle des dargestellten Axialmähdreschers kann die Erfindung auch an beliebigen anderen Typen von Mähdreschern verwendet werden, wie konventionellen Strohschüttlermaschinen. Ein Schneidwerk 16 wird verwendet, um Erntegut zu ernten und es einem Schrägförderer 18 zuzuführen.

Das geerntete Gut wird durch den Schrägförderer 18 einer Leittrommel 20 zugeführt. Die Leittrommel 20 führt das Erntegut nach oben durch einen Einlassübergangsabschnitt 22 zu einer axialen Gutbearbeitungseinheit 24. Die axiale Gutbearbeitungseinheit 24 ist zwischen den Seitenwänden des Mähdreschers 10 angeordnet und wird von ihnen abgestützt.

Die axiale Gutbearbeitungseinheit 24 umfasst ein axiales Rotorgehäuse 26 und einen im Rotorgehäuse 26 angeordneten axialen Rotor 28. Das geerntete Gut tritt durch den Einlassübergangsabschnitt 22 in das Rotorgehäuse 26 ein. Der Rotor 28 ist mit einem Beschickungsabschnitt, einem Dreschabschnitt und einem Trennabschnitt ausgestattet. Das Rotorgehäuse 26 hat je einen entsprechenden Beschickungsabschnitt, Dreschabschnitt und Trennabschnitt.

Beide Gutbearbeitungsabschnitte des Rotors 28, der Dreschabschnitt und der Trennabschnitt sind mit Guteingriffszusammenbauten ausgestattet. Der Dreschabschnitt des Rotorgehäuses 26 ist mit einem Dreschkorb ausgestattet und der Trennabschnitt mit einem Rost. Aus der Gutmatte freigesetzte Körner und Spreu fallen durch den Dreschkorb und den Rost. Der Dreschkorb und der Rost verhindern den Durchtritt von Erntegut, das größer als Korn oder Kaff ist, in das Reinigungssystem 34.

Wie in der Figur 1 dargestellt, wird durch den Dreschkorb und den Rost fallendes Korn und Spreu dem Reinigungssystem 34 zugeführt, das die Spreu vom Korn trennt. Das saubere Korn wird dann durch einen Elevator 36 für sauberes Korn einem Befüllschneckenförderer 38 zugeführt. Der Befüllschneckenförderer 38 fördert das Korn in einen Korntank 40 oder Kornbehälter. Der Elevator 36 für sauberes Korn und der Befüllschneckenförderer 38 umfassen Mittel zum Bewegen des sauberen Korns vom Kornboden des Mähdreschers in einen Vorratsbehälter, der vom Korntank 40 gebildet wird. Das Korn wird durch einen Entladeschneckenförderer 57 aus dem Korntank 40 entfernt. Wenn das Stroh das Ende der Gutbearbeitungseinheit 24 erreicht hat, wird es durch einen Auslass einer Auswurftrommel 46 zugeführt. Die Auswurftrommel 46 fördert das Stroh zur Rückseite des Mähdreschers 10 hinaus. Die Bedienung des Mähdreschers 10 erfolgt von einer Bedienerkabine 48 aus.

Wenn der Korntank 40 zu entleeren ist, führen quer angeordnete Entladeschneckenförderer 56 und 58 das Korn an die Seite des Korntanks 40, wo es mit dem Entladeschneckenförderer 57 in Berührung kommt, der das saubere Korn durch ein vertikales Entladerohr 61 und ein horizontales Entladerohr 59 leitet. Der Entladeschneckenförderer 57 umfasst einen vertikalen Abschnitt 57a, der sich zumindest teilweise innerhalb des Entladerohrs 61 befindet, ein rechtwinkliges Getriebe 57b, und einen horizontalen Abschnitt 57c innerhalb des Entladerohrs 59. Während einer Entladeoperation würde sich das Entladerohr 59 normalerweise von der Seite des Mähdreschers 10 nach außen erstrecken, so dass sauberes Korn einfacher in einen Wagen oder Anhänger geleitet werden kann.

Der Korntank 40 umfasst einen Trog 60, der einen größeren Trogbereich 70 und einen kleineren Trogbereich 72 umfasst, welche die horizontalen Entladeschneckenförderer 56 und 58 aufnehmen. Der Trog 60 ist zu einem Ladegehäuse oder Sumpf 64 hin offen. Der vertikale Abschnitt 57a des Entladeschneckenförderers 57 erstreckt sich durch das vertikale Rohr 61 und in den Sumpf 64. Das durch die horizontalen Entladeschneckenförderer 56 und 58 geförderte Korn wird in den Sumpf 64 abgegeben und mittels des vertikalen Abschnitts 57a durch das Rohr 61 und mittels des horizontalen Abschnitts 57 c durch das Entladerohr 59 entfernt.

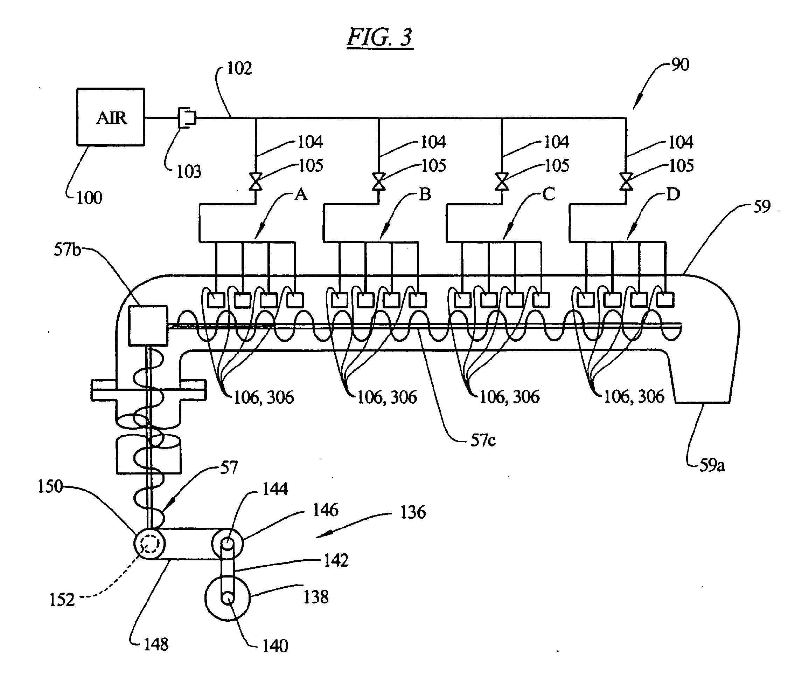

Die Figur 3 zeigt in schematischer Weise ein erfindungsgemäßes Reinigungssystem, das mit Luft arbeitet. Eine Luftversorgung 100 gibt über eine Schnellkupplung 103 unter Druck stehende Luft an eine Ventileinrichtung 102 ab. Alternativ zur Schnellkupplung 103 kann eine mit Gewinden versehene oder eine andere Art einer Kupplung verwendet oder darauf verzichtet werden. Die Luftversorgung 100 kann sich außerhalb des Mähdreschers 10 befinden. Die Ventileinrichtung 102 umfasst Zweiglinien 104, die Luft an stationäre Düsen 106 oder alternative Düsen 306 (wie unten beschrieben) abgeben. Ein Trennventil 105 ist in jeder Zweiglinie 104 vorgesehen. Wie weiter unten beschrieben, werden die Düsen 106, 306 mit unter Druck stehender Luft beaufschlagt, um Korn und Verunreinigungen aus dem Entladerohr 59 zu entfernen.

Um die Reinigungsoperation zu verstärken wird der Entladeschneckenförderer 57 einschließlich des horizontalen Abschnitts 57c durch ein angetriebenes Drehsystem 112 langsam gedreht. Ein derartiges Drehsystem ist in der prioritätsdatumsgleichen US-Patentanmeldung 10/309977 beschrieben.

Das angetriebene Drehsystem 112 umfasst einen mit 12 V betriebenen Gleichstrommotor 138, der eine Riemenscheibe 140 antreibt, die einen Riemen 142 antreibt, wenn der Motor 138 während des Reinigungsbetriebs aktiviert wird. Der Riemen 142 treibt eine Riemenscheibe 144 an, die ein Zahnrad 146 antreibt, das bei normalem Kornentladebetrieb vom Antriebsstrang des Mähdreschers 10 mit hoher Geschwindigkeit angetrieben wird. Das Zahnrad 146 treibt eine Kette 148 an, die ein Zahnrad 150 antreibt, welches ein rechtwinkliges Getriebe 152 antreibt, das den Entladeschneckenförderer 57 antreibt. Während des Reinigungsbetriebs treibt der relativ kleine Motor 138 den Entladeschneckenförderer 57 mit einer langsamen Geschwindigkeit an.

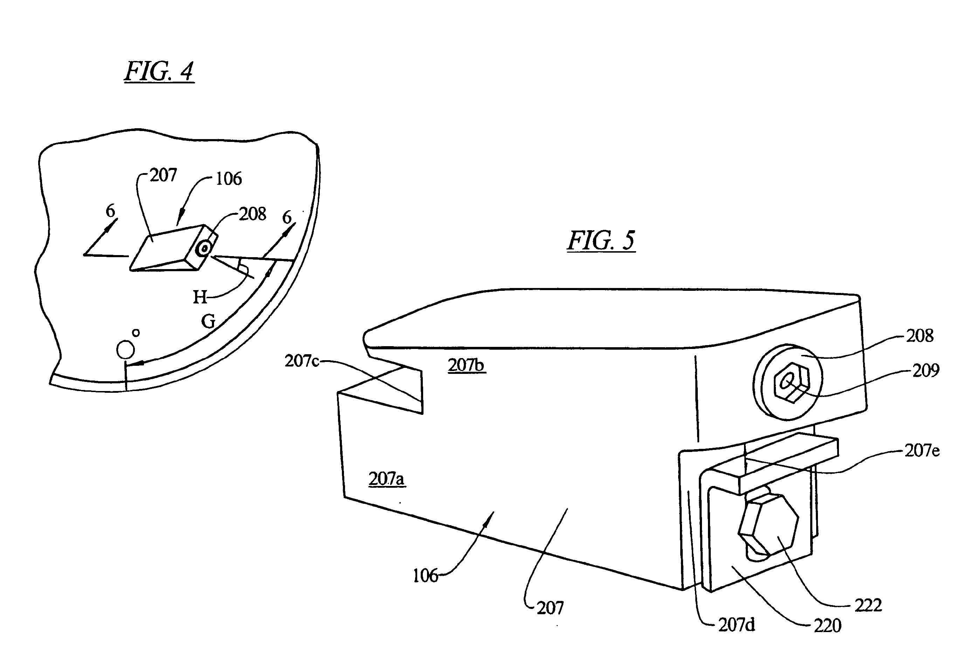

Die Figur 4 zeigt das horizontale Entladerohr 59 in einem perspektivischen Querschnitt. Es wird eine Düse 106 gezeigt. Die Düse 106 umfasst einen Düsenkörper 207, der unter Druck stehende Luft an ein Düsenelement 208 mit einer Austrittsöffnung 209 abgibt. Der Düsenkörper 207 erstreckt sich in das Entladerohr 59 und das Düsenelement 208 ist in Richtung auf ein stromab liegendes Ende des Entladerohrs 59 geöffnet. Die Düse 106 ist bei einem Winkel G oberhalb des bei 0 Grad liegenden Bodens des Entladerohrs 59 angeordnet. Der Winkel G ist vorzugsweise etwa 45 Grad. Die Austrittsöffnung 209 des Düsenelement 208 ist mit einem Winkel H nach unten gerichtet. Der Winkel H beträgt vorzugsweise etwa 10 Grad.

In Figur 5 ist eine Düse 106 dargestellt. Der Düsenkörper 207 umfasst einen Basisblockabschnitt 207a und einen inneren Blockabschnitt 207b. Ein Schlitz 207c ist im Basisblockabschnitt 207a benachbart zum inneren Blockabschnitt 207b an einem stromauf liegenden Ende des Düsenkörpers 207 angeordnet. An einem stromab liegenden Ende des Basisblockabschnitts 207a ragt der innere Blockabschnitt 207b über den Basisblockabschnitt 207a hinaus. Eine Klemmhalterung 220 ist mit einer Schraube 222 an einer stromab liegenden Fläche 207d des Basisblockabschnitts 207a befestigt. Eine Lücke 207e ist zwischen einer unteren Fläche des inneren Blockabschnitts 207b und einer oberen Fläche der Klemmhalterung 220 gebildet. Die Klemmhalterung 220 umfasst einen Schlitz 220a, um die Klemmhalterung 220 eng gegen eine Wand 223 des Mähdreschers 10 schieben zu können, wie z. B. die Wand des Entladerohrs 59, bevor die Schraube 222 angezogen wird. Ein alternatives Design für die Düse 106 umfasst einen einschnappenden Düsenkörper aus Kunststoff, der ähnlich dem zuvor beschriebenen Düsenkörper ist, einschließlich des Basisblockabschnitts und des inneren Blockabschnitts, die als einteilige Struktur geformt sind und keine weiteren Mittel zum Anklemmen erfordern.

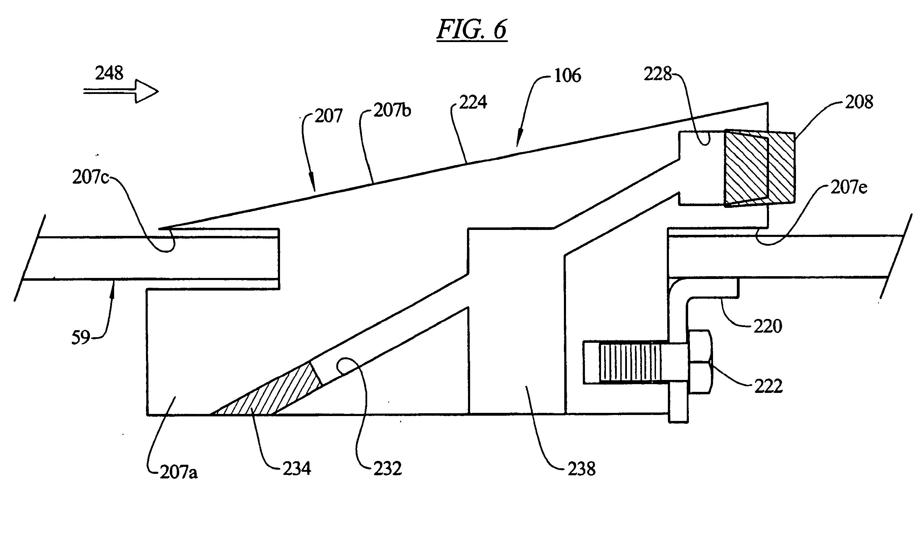

Wie in der Figur 6 gezeigt, umfasst die Düse 106 das Düsenelement 208, das in eine Öffnung 228 in dem inneren Blockabschnitt 207b eingeschraubt ist. Eine durchgehende Bohrung 232 durch den Basisblockabschnitt 207a und den inneren Blockabschnitt 207b ist nach ihrer Herstellung durch einen Schweißstopfen 234 verstopft. Die durchgehende Bohrung 232 steht mit der Öffnung 228 in Verbindung. Das Düsenelement 208 kann unter Verwendung eines Sechskantsteckschlüssels installiert werden, wobei das Düsenelement 208 in die Öffnung 228 im Düsenkörper 207 eingeschraubt wird. Eine Einlassbohrung 238 erstreckt sich im Wesentlichen senkrecht zu einer unteren Oberfläche des Basisblockabschnitts 207a und schneidet die durchgehende Bohrung 232. Die Einlassbohrung 238 ist mit einem Gewinde versehen, um ein Luftversorgungsfitting aufzunehmen.

Der innere Blockabschnitt 207b ist abgeschrägt, um eine geneigte obere Fläche 244 zu bilden, deren Entfernung von der inneren Oberfläche des Entladerohrs 59 in Richtung des Kornflusses 248 ansteigt. Wegen dieser Schrägung ist der Düsenkörper 207 vor unerwünschter Abnutzung durch auftreffendes Korn geschützt, und auch eine Verstopfung des Entladeschneckenförderers 57 mit Korn auf Grund von Mitziehens des Kornflusses oder Störungen innerhalb des Entladerohrs 59 ist unterbunden.

Die Düse 106 ist auf und in einer rechteckigen Öffnung 250 in der Wand 223 angebracht. Der Schlitz 207c nimmt einen Abschnitt der Wand 223 auf und die Klemmhalterung 220 wird gegen die Wand 223 geschoben und die Schraube 222 wird angezogen, um die Wand 223 zu erfassen. Der innere Blockabschnitt 207b befindet sich somit auf der Innenseite der Wand 223 und der Basisblockabschnitt 207a befindet sich außerhalb der Wand 223. Entsprechend der dargestellten Ausführungsform erstreckt sich der Düsenkörper 207 etwa 12 mm in das Entladerohr 59 hinein und hat einen Abstand von den Mitnehmern des Entladeschneckenförderers 57 von etwa 4 mm.

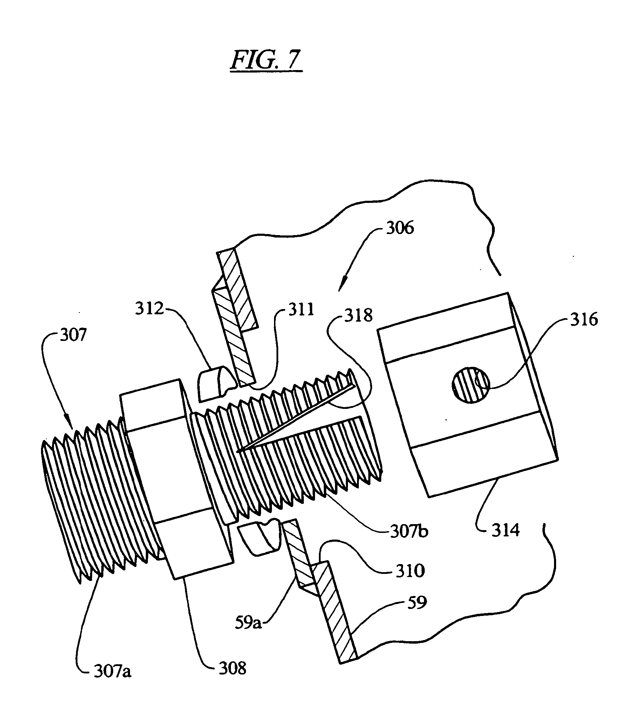

Die Figur 7 zeigt eine andere Düse 306. Die Düse 306 umfasst einen Düsenkörper 307 mit einem mit Gewinde versehenen, rohrförmigen Basisabschnitt 307a und einen mit Gewinde versehenen, rohrförmigen inneren Abschnitt 307b, die durch einen Block 308 voneinander getrennt sind, an dem ein Gabelschlüssel angreifen kann. Der Basisabschnitt 307a nimmt eine mit Gewinde versehene Verbindung (nicht gezeigt) mit unter Druck stehender Luft auf. Der innere Abschnitt 307b wird durch ein Loch 310 im Entladerohr 59 eingesetzt. Der innere Abschnitt 307b erstreckt sich auch durch ein Loch 311, das in einer Befestigungsplatte 59a gebildet ist, die auf das Entladerohr 59 aufgeschweißt ist. Eine Arretierungsmutter 312 und eine sechseckige Kappe 314 werden auf den inneren Abschnitt 307b geschraubt, um die Düse 306 an der Befestigungsplatte 59a festzuklemmen. Die Kappe 314 umfasst eine Austrittsöffnung 316 und der innere Abschnitt 307b umfasst einen dreieckigen Schlitz 318. Durch die Auswahl der Position der Kappe 314 entlang der Länge des inneren Abschnitts 307b kann die effektive Größe der Luftöffnung der Innenseite des inneren Abschnitts 307b zur Austrittsöffnung 316 eingestellt werden. Die Arretierungsmutter 312 wird dann am inneren Abschnitt 307b positioniert, um die Befestigungsplatte 59 gegen die Kappe 314 zu klemmen.

Durch die Verwendung dieser Düse 306 kann die Orientierung der Austrittsöffnung 316 innerhalb des Entladerohrs 59 leicht geändert werden, indem die Verriegelungsmutter 312 gelöst und der Düsenkörper 307 neu ausgerichtet wird. Vorzugsweise wird die Austrittsöffnung 316 in einem Abstand von etwa 1 bis 2 mm von der inneren Oberfläche des Entladerohrs 59 positioniert.

Das Druckluftreinigungssystem wurde an einem Entladerohr eines Mähdreschers der Anmelderin, Typ 9750 STS, getestet, das einen inneren Durchmesser von etwa 33 cm und eine Länge von etwa 6 m hat. Es wurden vier Gruppen A, B, C, D mit vier Düsen 306 verwendet, jede Gruppe durch eine separate Zweigleitung 104 und ein Trennventil 105 beaufschlagt. Bei gegebener Länge des Rohrs 59 war der Abstand der Düsen 306 entlang des Rohrs 59 etwa 35 cm. Die Düsen hatten Austrittsöffnungen 316 mit einem effektiven Durchmesser von etwa 2,4 mm, die bei dem Winkel G am Entladerohr 59 (s. Figur 4) von 45 Grad angebracht und mit dem Winkel H (s. Figur 4) von etwa 10 Grad nach unten gerichtet waren. Während der horizontale Abschnitt 57c des Entladeschneckenförderers 57 langsam gedreht wurde, wurden die Gruppen A, B, C, D der Düsen 306 nacheinander mit unter einem Druck von etwa 56 kPa (80 psi) stehender Luft beaufschlagt, von der Gruppe A, den am nächsten zum rechtwinkligen Getriebe 57b angeordneten Düsen 306 bis zur Gruppe D, den einem offenen Ende 59a (Figur 2) des Entladerohrs 59 nächsten Düsen 306, für eine Dauer von etwa 10 s für jede der Gruppen A, B, C, D. Es wurden sehr effektive Reinigungsergebnisse erzielt.

Ein erfindungsgemäßes Verfahren zur Entfernung von Korn aus einem Entladerohr 59 wird bereitgestellt, das die folgenden Schritte umfasst: Bereitstellen einer Vielzahl befestigter Düsen 106 oder 306 innerhalb des Entladerohrs 59, die Düsen der Vielzahl werden in Längsrichtung beabstandet angeordnet, und Verwenden der Düsen, indem Luft in das Entladerohr 59 geleitet wird, um Korn entlang des Entladerohrs 59 und in und um den Entladeschneckenförderer 57 herum und aus dem Auslass 59a des Entladerohrs 59 zu fördern.

Die einzelnen Düsen der Vielzahl können sequentiell und in Gruppen A, B, C, D von Düsen betrieben werden, in einer Richtung entlang des Entladerohrs 59 von einem stromauf liegenden Ende nahe des rechtwinkligen Getriebes 57b in Richtung auf den Auslass 59a des Entladerohrs 59 zu. Vorzugsweise wird jede der Gruppen für eine Zeit von etwa 30 s betrieben, um eine vollständige Reinigung sicherzustellen.

Um den Reinigungsvorgang zu verbessern kann der horizontale Abschnitt 57c langsam gedreht werden, während die Düsen 106, 306 betrieben werden, d. h. Luftströme mit hoher Geschwindigkeit in das Entladerohr 59 abgeben.

## Patentansprüche

1. Reinigungseinrichtung für ein Entladerohr (59) einer Erntemaschine, insbesondere eines Mähdreschers (10), **dadurch gekennzeichnet, dass** eine Vielzahl von Düsen (106, 306) an dem Entladerohr (59) angebracht sind, die Austrittsöffnungen (209, 316) aufweisen, die im Wesentlichen in Längsrichtung des Entladerohrs (59) ausgerichtet sind, um ein fließfähiges Medium, insbesondere Luft oder eine Flüssigkeit, in das Entladerohr (59) abzugeben und eine Reinigung des Entladerohrs (59) von Korn zu bewirken, und dass die Düsen (106, 306) mit Leitungen in Strömungsverbindung stehen, die unter Druck stehendes fließfähiges Medium führen.

2. Reinigungseinrichtung nach Anspruch 1, **dadurch gekennzeichnet, dass** die Düsen (106, 306) Körper (207, 307) aufweisen, die eine Wand (223) des Entladerohrs (59) durchdringen und im Entladerohr ein in Flussrichtung abgeschrägtes Profil aufweisen.

3. Reinigungseinrichtung nach Anspruch 1 oder 2, **dadurch gekennzeichnet, dass** die Düsen (106, 306) in Längsrichtung des Entladerohrs (59) voneinander beabstandet sind.

4. Reinigungseinrichtung nach einem der Ansprüche 1 bis 3, **dadurch gekennzeichnet, dass** die Düsen (106, 306) in einer Position am Entladerohr (59) befestigt sind, die sich etwa 45 Grad oberhalb des Bodens des Entladerohrs (59) befindet und/oder eine Auslassrichtung haben, die aus der Horizontalen um etwa 10 Grad nach unten geneigt ist.

5. Reinigungseinrichtung nach einem der Ansprüche 1 bis 4, **dadurch gekennzeichnet, dass** ein im Entladerohr (59) angeordneter Entladeschneckenförderer (57) während der Reinigung bewegbar ist.

6. Reinigungseinrichtung nach einem der Ansprüche 1 bis 5,
**dadurch gekennzeichnet, dass** die Düsen (106, 306) sequentiell beaufschlagt werden.

7. Reinigungseinrichtung nach Anspruch 6, **dadurch gekennzeichnet, dass** die Düsen (106, 306) in Gruppen (A, B, C, D) aufgeteilt sind, die sequentiell beaufschlagt werden.

8. Reinigungseinrichtung nach einem der vorhergehenden Ansprüche, **dadurch gekennzeichnet, dass** die Düsen (106, 306) mit einer stationären Quelle unter Druck stehenden Mediums verbindbar sind.

9. Entladerohr (59) einer Erntemaschine, insbesondere eines Mähdreschers (10), mit einer Reinigungseinrichtung nach einem der vorhergehenden Ansprüche.

## Claims

1. A cleaning device for a discharge tube (59) of a harvesting machine, especially a combine harvester (10), **characterized in that** a plurality of nozzles (106, 306) are fitted on the discharge tube (59) and have exit opening (209, 316) which are aligned essentially in the longitudinal direction of the discharge tube (59), in order to deliver a fluid medium, especially air or a liquid, into the discharge tube (59) and effect cleaning of the discharge tube (59) from grain, and **in that** the nozzles (106, 306) are in flow communication with lines which feed fluid medium under pressure.

2. A cleaning device according to claim 1, **characterized in that** the nozzles (106, 306) comprise bodies (207, 307) which penetrate a wall (223) of the discharge tube (59) and have a profile bevelled in the flow direction.

3. A cleaning device according to claim 1 or 2, **characterized in that** the nozzles (106, 306) are spaced from one another in the longitudinal direction of the discharge tube (59).

4. A cleaning device according to any of claims 1 to 3, **characterized in that** the nozzles (106, 306) are fixed in a position on the discharge tube (59) which is located about 45 degrees above the bottom the discharge tube (59) and/or have an outlet direction which is inclined down from the horizontal by about 10 degrees.

5. A cleaning device according to any of claims 1 to 4, **characterized in that** a discharge auger conveyor (57) arranged in the discharge tube (59) is movable during the cleaning.

6. A cleaning device according to any of claims 1 to 5, **characterized in that** pressure is admitted to the nozzles (106, 306) sequentially.

7. A cleaning device according to claim 6, **characterized in that** the nozzles (106, 306) are divided into groups (A, B, C, D) to which pressure is admitted sequentially.

8. A cleaning device according to any of the preceding claims, **characterized in that** the nozzles (106, 306) can be connected to a stationary source of a medium under pressure.

9. A discharge tube (59) of a harvesting machine, especially a combine harvester (10), with a cleaning device according to any of the preceding claims.

## Revendications

1. Dispositif de nettoyage pour un tube de déversement (59) d'une machine de récolte, en particulier une moissonneuse-batteuse (10), **caractérisé en ce qu'**une pluralité de buses (106, 306) sont agencées sur le tube de déversement (59), lesquelles comportent des orifices de sortie (209, 316) qui sont orientés sensiblement dans le sens longitudinal du tube de déversement (59) en vue d'introduire un agent d'écoulement fluide, en particulier l'air ou un liquide, dans le tube de déversement (59) et de nettoyer le tube de déversement (59) de grains, et **en ce que** les buses (106, 306) sont en liaison fluidique avec des conduites qui transportent un agent d'écoulement fluide sous pression.

2. Dispositif de nettoyage selon la revendication 1, **caractérisé en ce que** les buses (106, 306) comportent des corps (207, 307) qui passent à travers une paroi (223) du tube de déversement (59) et, dans le tube de déversement (59), ont un profil chanfreiné dans le sens du flux.

3. Dispositif de nettoyage selon la revendication 1 ou 2, **caractérisé en ce que** les buses (106, 306) sont écartées les unes des autres dans le sens longitudinal du tube de déversement (59).

4. Dispositif de nettoyage selon l'une quelconque des revendications 1 à 3, **caractérisé en ce que** les buses (106, 306) sont fixées dans le tube de déversement (59) dans une position située à environ 45 degrés au-dessus du fond du tube de déversement (59) et/ou ont une direction de sortie qui est inclinée vers le bas sur environ 10 degrés par rapport à l'horizontale.

5. Dispositif de nettoyage selon l'une quelconque des revendications 1 à 4, **caractérisé en ce qu'**une vis de déversement (57), agencée dans le tube de déversement (59), est mobile pendant le nettoyage.

6. Dispositif de nettoyage selon l'une quelconque des revendications 1 à 5, **caractérisé en ce que** les buses (106, 306) sont sollicitées séquentiellement.

7. Dispositif de nettoyage selon la revendication 6, **caractérisé en ce que** les buses (106, 306) sont réparties en groupes (A, B, C, D), qui sont sollicités séquentiellement.

8. Dispositif de nettoyage selon l'une quelconque des revendications précédentes, **caractérisé en ce que** les buses (106, 306) peuvent être reliées à une source stationnaire d'un milieu sous pression.

9. Tube de déversement (59) d'une machine de récolte, en particulier une moissonneuse-batteuse (10), comportant un dispositif de nettoyage selon l'une quelconque des revendications précédentes.
